(19) Europäisches Patentamt / European Patent Office / Office européen des brevets

(11) **EP 4 692 385 A1**

(12) **EUROPEAN PATENT APPLICATION**
published in accordance with Art. 153(4) EPC

(43) Date of publication:
**11.02.2026 Bulletin 2026/07**

(21) Application number: **24778930.8**

(22) Date of filing: **26.02.2024**

(51) International Patent Classification (IPC):
**C22B 23/02** (2006.01)   **C22B 5/10** (2006.01)

(52) Cooperative Patent Classification (CPC):
**C22B 5/10; C22B 23/02; Y02P 10/20**

(86) International application number:
**PCT/JP2024/006783**

(87) International publication number:
**WO 2024/202787 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057027
31.03.2023 JP 2023057028
31.03.2023 JP 2023057029**

(71) Applicant: **SUMITOMO METAL MINING CO., LTD.
Tokyo
105-8716 (JP)**

(72) Inventor: **ISEKI, Takashi
Niihama-shi, Ehime 792-0002 (JP)**

(74) Representative: **Jones, Nicholas Andrew
Withers & Rogers LLP
2 London Bridge
London SE1 9RA (GB)**

(54) **METHOD FOR SMELTING NICKEL OXIDE ORE**

(57)   The present invention provides a method for smelting an oxide ore, with which it is possible to enhance the quality of a metal obtained thereby and to efficiently produce a high-quality metal.

The present invention specifically provides a method for smelting a nickel oxide ore, the method comprising: a mixing step in which a nickel oxide ore and a first reducing agent are mixed so as to obtain a mixture; and a reduction step in which the mixture is charged into a reduction furnace and a second reducing agent is put into the reduction furnace so as to reduce the mixture.

FIG. 1

**Description**

TECHNICAL FIELD

The present invention relates to a smelting method for smelting pellets produced from an oxide ore such as a nickel oxide ore and a reducing agent by reducing and heating the pellets at a high temperature in a reducing furnace to obtain a reduced product such as ferronickel.

BACKGROUND ART

As a method for smelting a nickel oxide ore called limonite or saprolite, there are known a pyrometallurgical process for producing a nickel matte by sulfuration-roasting with sulfur using a smelting furnace, a pyrometallurgical process for producing an iron-nickel alloy (hereinafter, also referred to as "ferronickel") by performing reduction using a carbonaceous reducing agent using a rotary kiln or a moving hearth furnace, a hydrometallurgical process for producing a mixed sulfide by adding a sulfurizing agent to a leachate obtained by leaching nickel or cobalt with sulfuric acid using an autoclave, and the like.

In the various smelting methods described above, in a case of smelting a nickel oxide ore by performing reduction together with a carbon source, first, a pretreatment for forming a raw material ore into aggregates or slurry is performed.

Specifically, when the nickel oxide ore is formed into aggregates, that is, when the nickel oxide ore is formed into aggregates from a powder state or a fine particle state, the nickel oxide ore is mixed with a binder, a reducing agent, or the like, is further subjected to moisture adjustment or the like, and then charged into an aggregate producing machine to form an aggregate (referred to as pellets, briquettes, or the like.

Hereinafter, simply referred to as "pellets") of, for example, about 10 mm to 30 mm.

The pellets need to have a certain degree of air permeability in order to "evaporate" moisture contained therein.

In addition, if the reduction does not proceed uniformly in the pellets, a composition of the obtained reduced product becomes non-uniform, and there is an inconvenience that a metal is dispersed or unevenly distributed, and therefore, it is important to uniformly mix the mixture and maintain a uniform temperature as much as possible when subjecting the pellets to a reduction treatment.

In addition, it is also an important technique to coarsen the ferronickel generated by reduction.

This is because, in a case where the generated ferronickel has a fine size of, for example, several 10 m to several 100 m or less, it is difficult to separate the ferronickel from a simultaneously formed slag, and a recovery ratio (yield) of the ferronickel is greatly reduced.

Therefore, a treatment for coarsening the ferronickel after reduction is required.

Further, how low a smelting cost can be reduced is an important technical matter, and continuous treatments which can be performed in compact equipment are desired.

For example, Patent Document 1 discloses a method for producing a granular metal by supplying an agglomerate containing a metal oxide and a carbonaceous reducing agent such as coal or coke onto a hearth of a moving bed type reduction melting furnace and heating the mixture to reduce and melt the metal oxide, in which in a case where a relative value of a projected area ratio of the agglomerate to the hearth with respect to a maximum projected area ratio of the agglomerate to the hearth when a distance between the agglomerates is 0 is defined as a base density, an agglomerate having an average diameter of 19.5 mm or more and 32 mm or less is supplied onto the hearth such that the base density is 0.5 or more and 0.8 or less, and the agglomerate is heated.

In this method, it is described that the productivity of a granular metallic iron can be enhanced by controlling both the base density and the average diameter of the agglomerate.

However, the method disclosed in Patent Document 1 is a technique for controlling a reaction occurring outside the agglomerate, and does not focus on control of a reaction occurring inside the agglomerate, which is a most important factor in the reduction reaction.

On the other hand, there has been a demand for obtaining a metal (metal, alloy) of higher quality by increasing the reaction efficiency and promoting the reduction reaction more uniformly by controlling the reaction occurring inside the agglomerate.

In a method of using a material having a specific diameter as an agglomerate as described in Patent Document 1, it is necessary to remove a material having no specific diameter, and thus, a yield at the time of producing the agglomerate is low.

In addition, the method disclosed in Patent Document 1 is a method with low productivity because the base density of the agglomerate needs to be adjusted to 0.5 or more and 0.8 or less and the agglomerate cannot be laminated.

For this reason, a production cost of the method disclosed in Patent Document 1 is high.

As described above, the technique for producing a metal or an alloy by mixing and reducing an oxide ore has many problems in matters of increasing the productivity, reducing the production cost, and improving the quality of the metal.

Citation List

Patent Documents

Patent Document 1: Japanese Unexamined Patent Application, Publication No. 2011-256414

DISCLOSURE OF THE INVENTION

Problems to be Solved by the Invention

An object of the present invention is to provide a smelting method for producing a metal by reducing a mixture containing an oxide ore such as a nickel oxide ore, which is a method for smelting an oxide ore that can improve the grade of the obtained metal and efficiently produce a high-quality metal.

Means for Solving the Problems

The present inventors have intensively studied to solve the above problems.

As a result, the present inventors have found that the above problems can be solved by subjecting a mixture to a reduction treatment by charging a second reducing agent containing coal and further containing at least one of a charcoal and a starch in a reducing furnace, and have completed the present invention.

(1) A first aspect of the present invention is a method for smelting a nickel oxide ore, including: a mixing treatment step of mixing a nickel oxide ore and a first reducing agent to obtain a mixture; and a reduction step of subjecting the mixture to a reduction treatment by charging the mixture into a reducing furnace and charging a second reducing agent into the reducing furnace, in the reduction step, a reducing agent containing coal and further containing at least one or more of a charcoal and a starch being used as the second reducing agent.

(2) A second aspect of the present invention is the method for smelting a nickel oxide ore as described in the first aspect, in which in the reduction step, a reducing agent containing coal and a charcoal is used as the second reducing agent.

(3) A third aspect of the present invention is the method for smelting a nickel oxide ore as described in the first aspect, in which in the reduction step, a reducing agent containing coal and a starch is used as the second reducing agent.

(4) A fourth aspect of the present invention is the method for smelting a nickel oxide ore as described in the first aspect, in which in the reduction step, a reducing agent containing coal, a starch, and a charcoal is used as the second reducing agent.

(5) A fifth aspect of the present invention is the method for smelting a nickel oxide ore as described in any one of the first to fourth aspects, in which the reduction step includes a first reduction step of subjecting the mixture to a reduction treatment by charging at least a part of the second reducing agent into the reducing furnace, and a second reduction step of subjecting the mixture to a reduction treatment by charging the remaining second reducing agent into the reducing furnace.

(6) A sixth aspect of the present invention is the method for smelting a nickel oxide ore as described in the fifth aspect, in which in the first reduction step, the mixture is subjected to a reduction treatment by charging a reducing agent containing coal into the reducing furnace, and in the second reduction step, the mixture is subjected to a reduction treatment by charging a reducing agent containing at least one of a charcoal and a starch into the reducing furnace.

Effects of the Invention

The method for smelting an oxide ore according to the present invention can efficiently produce a high-quality metal.

BRIEF DESCRIPTION OF THE DRAWINGS

FIG. 1 is a process drawing illustrating an example of a flow of a method for smelting a nickel oxide ore;
FIG. 2 illustrates a measurement result of TG/DTA of a starch;
FIG. 3 illustrates a measurement result of TG/DTA of a charcoal;

FIG. 4 illustrates a measurement result of TG/DTA of coal; and

FIG. 5 is a diagram (plan view) illustrating a configuration example of a reducing furnace (rotary hearth furnace).

PREFERRED MODE FOR CARRYING OUT THE INVENTION

Hereinafter, a specific embodiment of the present invention will be described in detail.

The present invention is not limited to the following embodiments, and various modifications can be made without departing from the gist of the present invention.

In the present specification, the expression "X to Y" (X and Y are any numerical values) means "X or more and Y or less".

<<1. Overview of Present Invention>>

The present invention relates to a smelting method of an oxide ore for producing a metal of ferronickel as a reduced product by using a nickel oxide ore as a raw material and reducing a mixture obtained by mixing the oxide ore and a reducing agent.

According to the smelting method, the mixture is subjected to a reduction treatment by charging a reducing agent (second reducing agent) containing coal and further containing at least one or more of a charcoal and a starch into a reducing furnace.

According to such a method, the grade of the obtained metal can be improved by subjecting the mixture to a reduction treatment by charging the reducing agent (second reducing agent) containing coal and further containing at least one or more of a charcoal and a starch into the reducing furnace.

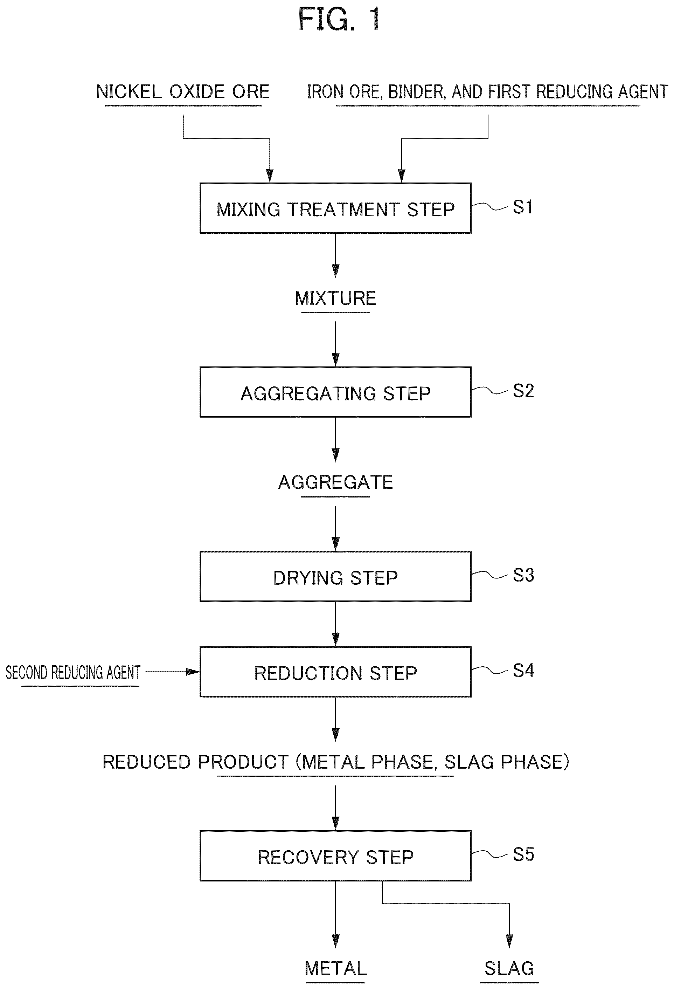

FIG. 1 is a diagram illustrating an example of a flow of a method for smelting a nickel oxide ore.

As illustrated in FIG. 1, the smelting method includes a mixing treatment step S1 of obtaining a mixture by mixing a nickel oxide ore as a raw material with a first reducing agent, an aggregating step S2 of forming the obtained mixture into a predetermined shape to form pellets (aggregates), a drying step S3 of drying the pellets (mixture), a reduction step S4 of subjecting the pellets (mixture) to a reduction treatment, and a recovery step S5 of recovering a metal from a reduced product generated by reduction.

<2-1. Mixing Treatment Step>

The mixing treatment step S1 is a step of obtaining a mixture by mixing raw material powder containing a nickel oxide ore.

Specifically, the first reducing agent is added to and mixed with the nickel oxide ore as a raw material ore, and powder such as an iron ore, a flux component, or a binder having a particle diameter of, for example, about 0.2 mm or more and 0.8 mm or less as an additive of an optional component is subjected to a mixing treatment to obtain a mixture.

The nickel oxide ore as the raw material ore is not particularly limited, and a limonite ore, a saprolite ore, or the like can be used.

A typical constituent of the nickel oxide ore contains nickel oxide (NiO) and iron oxide (Fe2O3).

The first reducing agent is not particularly limited, and examples thereof include carbonaceous reducing agents such as coal powder and coke powder.

In addition, a part or all of the first reducing agent may be composed of a plant-derived component such as a starch.

It is preferable that the carbonaceous reducing agent has the same size as a particle size or a particle size distribution of the nickel oxide ore as the raw material ore because the carbonaceous reducing agent is thus easily mixed uniformly and a reduction reaction is also easily performed uniformly.

A mixing amount of the first reducing agent is not particularly limited, and is preferably 25 mass% or more, more preferably 30 mass% or more, and further preferably 35 mass% or more, when an amount of a reducing agent required to reduce the nickel oxide and the iron oxide constituting the nickel oxide ore without excess or deficiency is 100 mass%.

An upper limit value of the mixing amount of the first reducing agent is not particularly limited, and is preferably 300 mass% or less, more preferably 200 mass% or less, further preferably 100 mass% or less, and still more preferably 50 mass % or less when a total value of a chemical equivalent is 100%.

The amount of the reducing agent required to reduce the nickel oxide and the iron oxide without excess or deficiency can be defined as a total value (hereinafter, also referred to as a "total value of chemical equivalents") of a chemical equivalent required to reduce a total amount of the nickel oxide contained in the mixture to a nickel metal and a chemical equivalent required to reduce the iron oxide contained in the mixture to an iron metal.

The iron ore that is an additive added as an optional component is not particularly limited, and for example, an iron ore having an iron grade of about 50 mass% or more, hematite obtained by hydrometallurgy of the nickel oxide ore, and the like can be used.

Examples of the binder include bentonite, polysaccharides, resins, water glass, and a dehydrated cake.

Examples of the flux component include calcium oxide, calcium hydroxide, calcium carbonate, and silicon dioxide.

Table 1 below shows an example of a composition (mass%) of a part of the raw material powder mixed in the mixing treatment step S1.

The composition of the raw material powder is not limited thereto.

[Table 1]

| Raw material [mass%] | Ni | $Fe_2O_3$ | C |
|---|---|---|---|
| Nickel oxide ore | 1~2 | 50~60 | - |
| Carbonaceous reducing agent | - | - | ≒85 |
| Iron ore | - | 80~95 | - |

In the mixing treatment step S1, the raw material powder containing the nickel oxide ore can be mixed using a mixer or the like.

In addition, when the raw material powder is mixed to obtain a mixture, the raw material powder may be subjected to a kneading treatment in order to improve the mixability.

Accordingly, a shearing force is applied to the mixture, agglomeration of the reducing agent, the raw material powder, and the like can be released and more uniformly mixed, and adhesion of respective particles can be improved and voids can be reduced, so that a uniform reduction treatment can be easily performed, and a reaction time of the reduction reaction can be shortened.

In addition, variation in quality can be prevented.

The kneading treatment can be performed using a batch type kneader such as a Brabender, a Banbury mixer, a Henschel mixer, a helical rotor, a roll, a single-screw kneader, a twin-screw kneader, or the like.

By kneading the mixture, a shearing force is applied to the mixture, agglomeration of the reducing agent, the raw material powder, and the like can be released and uniformly mixed, and the adhesion of the respective particles can be improved and voids can be reduced.

Accordingly, the reduction reaction easily occurs in the mixture and the reaction can be uniformly performed, and the reaction time of the reduction reaction can be shortened.

In addition, the variation in quality can be prevented.

After the mixing is performed or after the mixing and kneading are performed, the mixture may be extruded using an extruder.

Accordingly, a pressure (shearing force) is applied to the mixture, and agglomeration of the reducing agent, the raw material powder, and the like can be released, and the mixture can be more uniformly mixed.

Further, the voids in the mixture can be reduced.

Therefore, a reduction reaction of the mixture is likely to occur uniformly in a reduction step S3 to be described later, the grade of the obtained metal can be improved, and a high-quality metal can be produced.

The extruder is preferably an extruder capable of kneading and molding a mixture at high pressure and high shearing force, and examples thereof include a single-screw extruder and a twin-screw extruder.

In particular, a device provided with a twin-screw extruder is preferable.

By kneading the mixture at high pressure and high shear, agglomeration of the mixture of raw material powder can be released.

In addition, the kneading can be effectively performed, and the strength of the mixture can be enhanced.

Further, by using a device provided with a twin-screw extruder, a mixture can be obtained while continuously maintaining high productivity.

<2-2. Aggregating Step>

The aggregating step S2 is a step of molding the mixture of the raw material powder obtained in the mixing treatment step S1 to obtain pellets.

Although the aggregating step is not an essential step, the handleability can be improved by molding the mixture into a predetermined shape.

A shape of the pellets may be any shape as long as the pellets can be laminated on a hearth of the reducing furnace, and for example, the pellets preferably have a spherical shape, a rectangular parallelepiped shape, a cubic shape, a cylindrical shape, or the like.

By molding the mixture into such a shape, the mixture can be easily molded, so that a cost for the molding can be reduced.

In addition, since the shape to be molded is not complicated, it is possible to reduce generation of pellets with a molding failure and to easily maintain the strength of the pellets.

Among them, the pellets preferably have a shape that allows the pellets to be placed on the hearth at a high density, and for example, the shape is preferably an elliptical shape or a cylindrical shape.

By placing the pellets on the hearth of the reducing furnace at a high density and performing the reduction treatment, a proportion of the pellets consumed by oxygen, water, and the like inevitably contained is reduced, and thus a reduction atmosphere can be efficiently maintained.

In the aggregating step S2, for example, the mixture can be molded using a pellet molding device.

The pellet molding device is not particularly limited, and is preferably a pellet molding device capable of kneading and molding a mixture at high pressure and high shearing force.

By kneading the mixture at high pressure and high shear, the agglomeration of the mixture of the raw material powder can be released, the mixture can be effectively kneaded, and the strength of the obtained pellets can be enhanced.

<2-3. Drying Treatment>

In the drying step S3, the obtained pellets are subjected to a drying treatment.

Although the drying step is not an essential step, the pellets obtained by performing the aggregating treatment to obtain a pellet shape contain moisture in an excessive amount of, for example, about 50 mass%.

Therefore, when a temperature of the pellets containing the excessive amount of moisture is rapidly increased to a reduction temperature, the moisture may vaporize and expand to break the pellets.

Therefore, the obtained pellets are subjected to the drying treatment such that, for example, a solid content is about 70 mass% and the moisture is about 30 mass%, which makes it possible to prevent the pellets from being disintegrated in a reduction heating treatment in the subsequent reduction step S3.

And thus, it is possible to avoid difficulty in taking out the pallets from the reducing furnace.

Further, since the pellets are often in a sticky state with an excessive amount of moisture, the pellets can be easily handled by performing the drying treatment.

A method for drying the pellets is not particularly limited, and methods known in the related art such as a method for maintaining pellets at a predetermined drying temperature (for example, 200C or higher and 400C or lower) or a method for drying pellets by blowing hot air of a predetermined drying temperature to a mixture can be used.

By such a drying treatment, for example, the solid content of the pellets is about 70 mass%, and the moisture is about 30 mass%.

A temperature of the mixture itself at the time of the drying treatment is preferably lower than 100C, which makes it possible to prevent rupture of the mixture due to bumping of the moisture or the like.

This drying step may be performed outside a reducing furnace to be described later, or the pellets may be charged into the reducing furnace to be described later and subjected to the drying treatment inside the reducing furnace.

Here, particularly in a case where pellets having a large volume are dried, the pellets before and after drying may have fractures or cracks.

In the case where the pellets have a large volume, the pellets melt and contract at the time of reduction, and thus fractures or cracks are often generated.

However, in the case where the pellets have a large volume, an influence of an increase in surface area caused by the fractures or cracks is small, and thus a large problem hardly occurs.

Therefore, the pellets before reduction may have fractures or cracks.

Further, the drying treatment may be performed continuously at one time or may be performed in a plurality of times.

By performing the drying treatment in a plurality of times, the rupture of the mixture can be more effectively prevented.

In the case where the drying treatment is performed in a plurality of times, a drying temperature in the second and subsequent drying treatments is preferably 150C or higher and 400C or lower.

By drying within this range, the drying can be performed without the progress of the reduction reaction.

Table 2 below shows an example of a composition (parts by mass) in the solid content in the pellets (mixture) after the drying treatment.

The composition of the pellets (mixture) is not limited thereto.

[Table 2]

| Composition of solid content in mixture after drying (mass%) | | | | | | | |
|---|---|---|---|---|---|---|---|
| Ni | Fe$_2$O$_3$ | SiO$_2$ | CaO | Al$_2$O$_3$ | MgO | Binder | Others |
| 0.5~1.5 | 50~60 | 8~15 | 4~8 | 1~6 | 2~7 | ≒1 | Remainder |

<2-4. Reduction Step>

In the reduction step S4, the pellets dried in the drying step S3 are subjected to a reduction treatment.

Specifically, the obtained aggregate (pellet) is placed on the hearth of the reducing furnace, and the mixture is subjected to a heating and reduction treatment by the reducing furnace.

By the heating and reduction treatment in the reduction step S4, a smelting reaction (reduction reaction) proceeds based on the reducing agent (first reducing agent) in the mixture, and a ferronickel metal (hereinafter, simply referred to as a "metal") and a ferronickel slag (hereinafter, simply referred to as a "slag") are separately generated in the mixture.

Hereinafter, the pellets to be subjected to the reduction treatment are referred to as a mixture for convenience.

In the heating and reduction treatment, for example, in a short time of about 1 minute, first, in the vicinity of a surface of the mixture in which the reduction reaction easily proceeds, the nickel oxide and the iron oxide in the mixture are reduced and metalized to form ferronickel, and a shell is formed.

On the other hand, in the shell, a slag component is gradually melted as the shell is formed, and the slag in a liquid phase is generated.

As a result, the metal and the slag are separately generated in the mixture.

When a treatment time has elapsed about 10 minutes, an excess reducing agent not involved in the reduction reaction is taken into the metal to lower a melting point, and the metal is also in a liquid phase.

As a result, the grade of the obtained metal can be stably improved, and a high-quality metal can be obtained.

A temperature in the reduction treatment (reduction temperature) is not particularly limited, and is preferably in a range of 1,200C or higher and 1,450C or lower, and more preferably in a range of 1,300C or higher and 1,400C or lower.

By performing reduction in such a temperature range, a reduction reaction can be caused to occur uniformly, and the ferronickel in which the variation in quality is prevented can be generated.

In addition, more preferably, by performing the reduction at a reduction temperature in the range of 1,300C or higher and 1,400C or lower, a desired reduction reaction can be caused to occur in a relatively short time.

A time for the reduction treatment (treatment time) is set according to the temperature of the reducing furnace, and is preferably 10 minutes or more, and more preferably 15 minutes or more.

On the other hand, an upper limit of the time for performing the reduction heating treatment may be 50 minutes or less, or may be 40 minutes or less, from the viewpoint of preventing an increase in production cost.

An integrated amount of heat required for reduction, calculated by multiplying numerical values of the reduction temperature (C) and the reduction time (min) is preferably in a range of 20,000 (C min) to 40,000 (C min).

By performing the reduction treatment with this amount of heat, a high-quality metal can be efficiently produced.

In the reduction step S4, the mixture is subjected to a reduction treatment by charging a reducing agent (second reducing agent) containing coal and further containing at least one of a charcoal and a starch into the reducing furnace.

As a method for clarifying a behavior of a sample in the reducing furnace, a method for measuring a TG curve and a DTA curve using a TG/DTA (thermogravimetry-differential thermal simultaneous analyzer) is exemplified.

The TG/DTA is a device capable of performing differential thermal analysis and thermogravimetric measurement at the same time, and a behavior such as decomposition or phase transition of the sample shown when a temperature change is given to the sample can be more clarified by the TG curve or the DTA curve.

The TG curve represents a weight of the sample with respect to the temperature, and the DTA curve represents a temperature difference between the sample and a reference material with respect to the temperature.

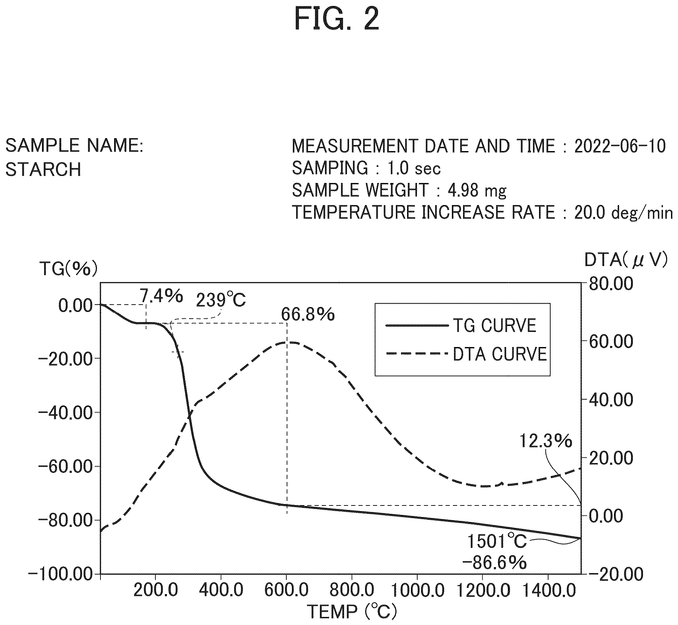

FIG. 2 illustrates a TG curve and a DTA curve of a "starch" measured using the TG/DTA.

The TG curve of the starch shows that a rapid weight reduction occurs in the vicinity of 240C as the temperature rises from room temperature, and further, the DTA curve of the starch shows a large local maximum in the vicinity of 600C.

This indicates that a decomposition temperature of the starch is relatively lower than a decomposition temperature of coal.

Therefore, it is presumed that the starch can cause the reduction reaction to proceed at a high reaction rate under a relatively low temperature condition.

It is considered that this is because the starch is a polymer composed of carbon, hydrogen, and oxygen, a bond between the hydrogen and the carbon is broken due to the increase in temperature, H2 gas is generated, a porous structure is formed, and a bond between carbon atoms constituting the starch is weak.

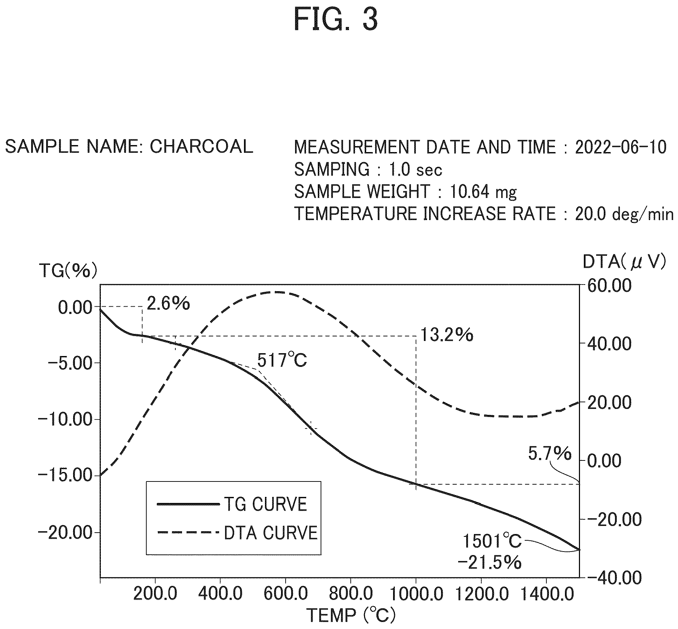

FIG. 3 illustrates a TG curve and a DTA curve of a "charcoal" measured using the TG/DTA.

The TG curve of the charcoal shows that a weight reduction occurs immediately when the temperature is increased from room temperature, and further, the DTA curve of the charcoal shows a large local maximum in the vicinity of 600C.

This indicates that a decomposition temperature of the charcoal is relatively lower than the decomposition temperature of the coal.

Therefore, it is presumed that the charcoal can cause the reduction reaction to proceed at a high reaction rate under a relatively low temperature condition.

It is considered that this is because the charcoal is produced by steaming a wood as a material and volatilizing moisture in the wood, and thus a porous structure is formed, and a bond between carbon atoms constituting the charcoal is weak.

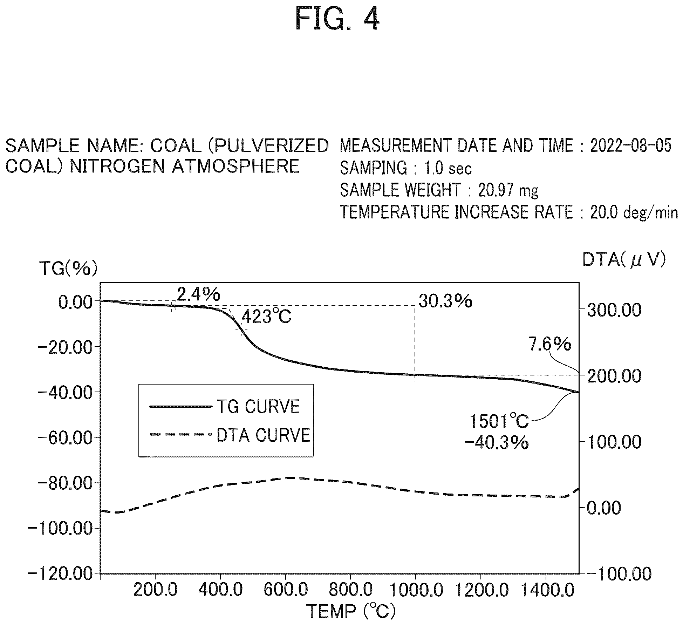

On the other hand, FIG. 4 illustrates a TG curve and a DTA curve of "coal" measured using the TG/DTA.

The TG curve of the coal shows that a weight hardly changes even when the temperature is increased from room temperature, as compared with the case of charcoal, and is a further broad curve.

A weight reduction in the vicinity of 420C is considered to be caused by decomposition and volatilization of a volatile organic material (volatile matter).

This indicates that the decomposition temperature of the coal is relatively higher than the decomposition temperature of the charcoal.

Therefore, it is presumed that the coal can cause the reduction reaction to proceed for a long period of time under a relatively high temperature condition.

It is considered that this is because the coal is a fossil fuel generated by a plant, an oxide, or the like being transformed (coalified) by receiving geothermal heat or ground pressure for a long period of time, and thus carbon atoms derived from the plant are concentrated, and a bond between carbon atoms constituting the coal is strong.

In the smelting method according to the present embodiment, the mixture is subjected to a reduction treatment by charging a second reducing agent containing coal and at least one of a charcoal and a starch into the reducing furnace, the charcoal and starch having a relatively low decomposition temperature and substantially containing no other component such as an oxide, and the coal having a relatively high decomposition temperature and may contain an oxide or the like.

As a result, even when a part of the metal obtained by oxygen inevitably mixed from a recovery port of the reduced product, a charging port of the mixture, an inlet of the second reducing agent, or the like, oxygen supplied from a burner, or water generated by combustion of a fuel of the burner is reoxidized, the metal can be reduced again by a second reducing agent containing a starch and coal, and oxidation of a part of the further obtained metal can be prevented, thereby enhancing the grade of the obtained metal.

In the smelting method according to the present embodiment, a reducing agent containing coal and a charcoal may be used as the second reducing agent.

Accordingly, oxidation of a part of the obtained metal can be prevented, and thus the grade of the obtained metal can be enhanced.

In the smelting method according to the present embodiment, a reducing agent containing coal and a starch may be used as the second reducing agent.

Accordingly, oxidation of a part of the obtained metal can be prevented, and thus the grade of the obtained metal can be enhanced.

Further, in the smelting method according to the present embodiment, a reducing agent containing coal, a starch, and a charcoal may be used as the second reducing agent.

Accordingly, oxidation of a part of the obtained metal can be prevented, and thus the grade of the obtained metal can be enhanced.

Regarding the charging of the second reducing agent into the reducing furnace, a method for charging the second reducing agent into the reducing furnace through a predetermined inlet of the reducing furnace is exemplified.

A charging position is not particularly limited, and may be near the mixture, near a heat source (for example, flame of burner), or between the mixture and the heat source (for example, flame of burner).

In particular, the charging position is preferably near the mixture.

The charging of the second reducing agent into the reducing furnace may be performed at any timing.

For example, the second reducing agent may be charged into the reducing furnace before the reduction treatment is performed, the second reducing agent may be charged into the reducing furnace while the temperature is raised to a set reduction temperature, the second reducing agent may be charged into the reducing furnace when the set reduction temperature is reached, the second reducing agent may be charged into the reducing furnace when the reduction reaction proceeds to some extent after the reduction temperature is reached (or when the temperature is maintained at the set reduction temperature), or the second reducing agent may be charged into the reducing furnace when the reduction reaction is ended.

An amount (charge amount) of the second reducing agent charged into the reducing furnace is not particularly limited, and is preferably a proportion in a range of 3 mass% or more and 100 mass% or less, more preferably a proportion in a range of 4 mass% or more and 70 mass% or less, and further preferably a proportion in a range of 5 mass% or more and 50 mass% or less, when an amount of the reducing agent required to reduce the iron oxide and the nickel oxide contained in the nickel oxide ore constituting the mixture without excess or deficiency is 100 mass%.

When the amount of the second reducing agent is 3 mass% or more, reoxidation of the generated metal can be more effectively prevented.

In addition, when the amount of the second reducing agent is 100 mass% or less, the possibility of overreduction can be reduced, and thus a decrease in nickel grade in the metal can be prevented.

The second reducing agent is not particularly limited, and may be, for example, a carbonaceous reducing agent such as coal or coke, or a plant-derived organic reducing agent such as a charcoal, a bamboo charcoal, or a starch.

In a case where a plant-derived organic reducing agent is used as the second reducing agent, the plant-derived organic reducing agent may burn during the heating and reduction treatment.

Therefore, the mixture is preferably subjected to the reduction treatment under an atmosphere having a low oxygen concentration in the reducing furnace.

The atmosphere having a low oxygen concentration means that, for example, the reduction treatment is preferably performed in an atmosphere having an oxygen concentration of 3.0% by volume or less, and the reduction treatment is more preferably performed in an atmosphere having an oxygen concentration of 1.0% by volume or less.

In addition, the reduction treatment may be performed in an atmosphere of an inert gas such as nitrogen or argon.

In a case where the reducing agent containing coal and a charcoal is used as the second reducing agent, a charge amount of the coal in the second reducing agent is not particularly limited, and is preferably 1 mass% or more and 15 mass% or less, more preferably 3 mass% or more and 12 mass% or less, and further preferably 6 mass% or more and 11 mass% or less, when an amount of the reducing agent required to reduce nickel oxide and iron oxide constituting the nickel oxide ore without excess or deficiency is 100 mass%.

In the case where the reducing agent containing coal and a charcoal is used as the second reducing agent, a charge amount of the charcoal in the second reducing agent is not particularly limited, and is preferably 1.0 mass% or more and 10.0 mass% or less, more preferably 1.3 mass% or more and 7.0 mass% or less, and further preferably 1.5 mass% or more and 4.5 mass% or less, when an amount of the reducing agent required to reduce nickel oxide and iron oxide constituting the nickel oxide ore without excess or deficiency is 100 mass%.

In the case where the reducing agent containing coal and a charcoal is used as the second reducing agent, a total content of the charcoal and the coal in the second reducing agent is preferably 50 mass% or more, preferably 70 mass% or more, and further preferably 90 mass% or more based on a total amount of the second reducing agent, and the second reducing agent is most preferably composed of only the charcoal and the coal (that is, the total content of the charcoal and the coal is 100 mass% based on the total amount of the reducing agent).

In a case where the reducing agent containing coal and a starch is used as the second reducing agent, a charge amount of the coal in the second reducing agent is not particularly limited, and is preferably 0.01 mass% or more and 15 mass% or less, more preferably 0.03 mass% or more and 12 mass% or less, and further preferably 0.05 mass% or more and 11 mass% or less, when an amount of the reducing agent required to reduce nickel oxide and iron oxide constituting the nickel oxide ore without excess or deficiency is 100 mass%.

In the case where the reducing agent containing coal and a starch is used as the second reducing agent, a charge amount of the starch in the second reducing agent is not particularly limited, and is preferably 0.01 mass% or more and 15 mass% or less, more preferably 0.03 mass% or more and 10 mass% or less, and further preferably 0.05 mass% or more and 6 mass% or less, when an amount of the reducing agent required to reduce nickel oxide and iron oxide constituting the nickel oxide ore without excess or deficiency is 100 mass%.

In the case where the reducing agent containing coal and a starch is used as the second reducing agent, the total content of the starch and the coal in the second reducing agent is preferably 50 mass% or more, preferably 70 mass% or more, and more preferably 90 mass% or more based on the total amount of the second reducing agent, and the second reducing agent is most preferably composed of only the starch and the coal (that is, the total content of the starch and the coal is 100 mass% based on the total amount of the reducing agent).

In a case where the reducing agent containing coal, a charcoal, and a starch is used as the second reducing agent, a total charge amount of the starch and the charcoal in the second reducing agent is not particularly limited, and is preferably 0.01 mass% or more and 15 mass% or less, more preferably 0.03 mass% or more and 10 mass% or less, and further preferably 0.05 mass% or more and 6 mass% or less, when an amount of the reducing agent required to reduce nickel oxide and iron oxide constituting the nickel oxide ore without excess or deficiency is 100 mass%.

In the case where the reducing agent containing coal, a charcoal, and a starch is used as the second reducing agent, a content proportion of the starch and the charcoal in the second reducing agent is not particularly limited, and a mixing proportion of a chemical equivalent of the starch mixed with the nickel oxide ore and a chemical equivalent of the charcoal mixed with the nickel oxide ore is preferably in a range of 30:70 to 70:30, more preferably in a range of 40:60 to 60:40, and further preferably in a range of 45:55 to 55:45.

In the case where the reducing agent containing coal, a charcoal, and a starch is used as the second reducing agent, a total content of the starch, the coal, and the charcoal in the second reducing agent is preferably 50 mass% or more, preferably 70 mass% or more, and further preferably 90 mass% or more based on a total amount of the second reducing agent, and the second reducing agent is most preferably composed of only the starch, the coal, and the charcoal (that is, the total content of the starch, the coal, and the charcoal is 100 mass% based on the total amount of the reducing agent).

The charging of the second reducing agent into the reducing furnace may be performed in two or more stages.

Specifically, the reduction step may be a reduction step divided into two steps including a first reduction step of subjecting the mixture to a reduction treatment by charging at least a part of the second reducing agent into the reducing furnace in an early stage of the reduction treatment, and a second reduction step of subjecting the mixture to a reduction treatment by charging the remaining second reducing agent into the reducing furnace in a latter stage of the reduction treatment.

In this case, the second reducing agent may be charged into the reducing furnace from one inlet of the reducing furnace or may be separately charged from a plurality of inlets of the reducing furnace.

In the case of the reduction step including the first reduction step and the second reduction step, a charge amount of the second reducing agent in the first reduction step is not particularly limited, and is preferably 1 mass% or more and 10 mass% or less, and further preferably 1 mass% or more and 5 mass% or less, when an amount of the reducing agent required to reduce nickel oxide and iron oxide constituting the nickel oxide ore without excess or deficiency is 100 mass%.

In the case of the reduction step including the first reduction step and the second reduction step, a charge amount of the second reducing agent in the second reduction step is not particularly limited, and is preferably 1 mass% or more and 7 mass% or less, and further preferably 1 mass% or more and 4 mass% or less, when an amount of the reducing agent required to reduce nickel oxide and iron oxide constituting the nickel oxide ore without excess or deficiency is 100 mass%.

As described above, in the case of the reduction step including the first reduction step and the second reduction step, in the first reduction step which is the early stage of the reduction treatment, the mixture may be subjected to a reduction treatment by charging a reducing agent containing coal into the reducing furnace, and in the second reduction step which is the latter stage of the reduction treatment, the mixture may be subjected to a reduction treatment by charging a reducing agent containing at least one of a charcoal and a starch into the reducing furnace.

A decomposition temperature of the coal is relatively higher as compared to a decomposition temperature of the charcoal.

Therefore, the reducing atmosphere can be maintained for a long time by charging the coal which is relatively difficult to decompose into the reducing furnace in the first reduction step which is the early stage of the reduction treatment.

Further, a reoxidized metal can be effectively reduced again by charging at least one of the charcoal and the starch, which are relatively easily decomposed and can cause the reduction reaction to proceed at a high reaction rate, into the reducing furnace in the second reduction step which is the latter stage of the reduction treatment.

In this case, the "reducing agent containing coal" and the "reducing agent containing at least one of a charcoal and a starch" may be charged from the same inlet.

In addition, a plurality of inlets may be provided in the reducing furnace, and the "reducing agent containing at least one of a charcoal and a starch" may be charged from one inlet and the "reducing agent containing coal" may be charged from another inlet.

In the case of the reduction step including the first reduction step and the second reduction step, the first reduction step and the second reduction step may perform a heating treatment in steps at different temperatures.

For example, a temperature in the processing chamber may be controlled such that the reduction treatment in the first reduction step is performed at a reduction temperature in a range of 1,150C or higher and 1,350C or lower, and a temperature in another processing chamber may be controlled such that the reduction treatment in the second reduction step is performed at a reduction temperature in a range of 1,350C or higher and 1,450C or lower.

By performing the heating treatment in steps at different temperatures in this manner, the reduction atmosphere can be maintained for a long time, the reduction reaction can be uniformly performed, and a metal can be efficiently generated by charging coal, which is relatively difficult to decompose in a temperature range having a relatively low temperature in the first reduction step, into the reducing furnace, and reoxidation of the reoxidized metal can be effectively prevented in a short time by charging a reducing agent containing at least one of a charcoal and a starch, which are relatively easily decomposed in a temperature range having a relatively high temperature in the second reduction step and can cause a reduction reaction to proceed at a high reaction rate, into the reducing furnace.

For example, in the case where the reducing agent containing coal and a charcoal is used as the second reducing agent to be charged into the reducing furnace, for example, a temperature in the processing chamber may be controlled such that the reduction treatment in the first reduction step is performed at a reduction temperature in a range of 1,250C or higher and 1,350C or lower, and a temperature in another processing chamber may be controlled such that the reduction treatment in the second reduction step is performed at a reduction temperature in a range of 1,350C or higher and 1,450C or lower.

For example, in the case where the reducing agent containing coal and a starch is used as the second reducing agent to be charged into the reducing furnace, for example, a temperature in the processing chamber may be controlled such that the reduction treatment in the first reduction step is performed at a reduction temperature in a range of 1,150C or higher and 1,250C or lower, and a temperature in another processing chamber may be controlled such that the reduction treatment in the second reduction step is performed at a reduction temperature in a range of 1,350C or higher and 1,450C or lower.

For example, in the case where the reducing agent containing coal, a charcoal, and a starch is used as the second reducing agent to be charged into the reducing furnace, for example, a temperature in the processing chamber may be controlled such that the reduction treatment in the first reduction step is performed at a reduction temperature in a range of 1,150C or higher and 1,350C or lower, and a temperature in another processing chamber may be controlled such that the reduction treatment in the second reduction step is performed at a reduction temperature in a range of 1,350C or higher and 1,450C or lower.

The reducing furnace used for the reduction heating treatment is not particularly limited.

For example, a fixed hearth or a moving hearth furnace may be used, and a moving hearth furnace is preferably used.

By using the moving hearth furnace as such a reducing furnace, the mixture can be treated more efficiently.

In addition, by using the moving hearth furnace, the reduction reaction proceeds continuously, the reaction can be completed in one equipment, and a treatment temperature can be controlled more accurately than in a case where treatments in respective steps are performed using separate furnaces.

Further, the heat loss between the treatments is reduced, and more efficient operation is possible.

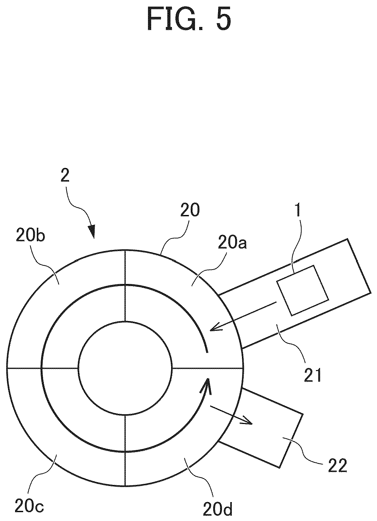

Hereinafter, a configuration of a rotary hearth furnace as an example of the moving hearth furnace will be described with reference to FIG. 5.

FIG. 5 is a diagram (plan view) illustrating a configuration example of the rotary hearth furnace in which a hearth rotates.

As illustrated in FIG. 5, a rotary hearth furnace 2 having a circular shape and divided into a plurality of processing chambers 20a to 20d can be used.

In the rotary hearth furnace 2, each treatment is performed in each region while rotating in a predetermined direction.

In the rotary hearth furnace, a treatment temperature in each region can be adjusted by controlling a time (movement time and rotation time) when the rotary hearth furnace 2 passes through each region, and a mixture 1 is subjected to a smelting treatment every time the rotary hearth furnace makes one rotation.

Here, the rotary hearth furnace 2 may be provided with a preheating chamber outside the furnace.

In addition, the rotary hearth furnace 2 may be provided with a cooling chamber outside the furnace.

The moving hearth furnace may be a roller hearth kiln or the like.

When the reduction treatment is performed using the rotary hearth furnace, the heating treatment may be performed in steps at different temperatures.

In the case of the reduction step including the first reduction step of subjecting the mixture to a reduction treatment by charging the reducing agent containing at least one or more of a charcoal and a starch into the reducing furnace, and a second reduction step of subjecting the mixture to a reduction treatment by charging the reducing agent containing coal into the reducing furnace, it is preferable to perform the reduction treatment using the rotary hearth furnace.

Specifically, a temperature in one processing chamber is controlled such that the reduction treatment in the first reduction step is performed at a reduction temperature in a range of 1,150C or higher and 1,350C or lower, and a temperature in another processing chamber is controlled such that the reduction treatment in the second reduction step is performed at a reduction temperature in a range of 1,350C or higher and 1,450C or lower.

By charging coal, which is relatively difficult to decompose, into the processing chamber controlled to a range of 1,150C or higher and 1,350C or lower, the reduction atmosphere can be maintained for a long time, the reduction reaction can be uniformly performed, and the metal can be efficiently generated.

By charging at least one of a charcoal and a starch, which are relatively easily decomposed and can cause the reduction reaction to proceed at a high reaction rate, into a processing chamber controlled to a range of 1,350C or higher and 1,450C or lower, reoxidation of the reoxidized metal can be effectively prevented in a short time.

For example, in the case where the reducing agent containing coal and a charcoal is used as the second reducing agent to be charged into the reducing furnace, a temperature in one processing chamber may be controlled such that the reduction treatment in the first reduction step is performed at a reduction temperature in a range of 1,250C or higher and 1,350C or lower, and a temperature in another processing chamber may be controlled such that the reduction treatment in the second reduction step is performed at a reduction temperature in a range of 1,350C or higher and 1,450C or lower.

For example, in the case where the reducing agent containing coal and a starch is used as the second reducing agent to be charged into the reducing furnace, a temperature in one processing chamber may be controlled such that the reduction treatment in the first reduction step is performed at a reduction temperature in a range of 1,150C or higher and 1,250C or lower, and a temperature in another processing chamber may be controlled such that the reduction treatment in the second reduction step is performed at a reduction temperature in a range of 1,350C or higher and 1,450C or lower.

For example, in the case where the reducing agent containing coal, a charcoal, and a starch is used as the second reducing agent to be charged into the reducing furnace, a temperature in one processing chamber may be controlled such that the reduction treatment in the first reduction step is performed at a reduction temperature in a range of 1,150C or higher and 1,350C or lower, and a temperature in another processing chamber may be controlled such that the reduction treatment in the second reduction step is performed at a reduction temperature in a range of 1,350C or higher and 1,450C or lower.

In this case, it is preferable that a plurality of inlets are provided for the respective processing chambers of the reducing furnace such that a reducing agent containing a charcoal and a reducing agent containing coal can be charged into the reducing furnace in different processing chambers, and the "reducing agent containing at least one of a charcoal and a starch" and the "reducing agent containing coal" are charged from the respective inlets.

The "reducing agent containing a starch" and the "reducing agent containing a charcoal" may be charged from the same inlet, or the "reducing agent containing a starch" and the "reducing agent containing a charcoal" may be charged from different inlets.

A heating unit of the reducing furnace is not particularly limited, and may be a burner, or a heating unit using electricity or the like.

A burner is preferable because the mixture can be effectively subjected to the heating and reduction treatment in a short time.

In a case where a reducing furnace having a burner is used, for example, LPG, LNG, coal, coke, pulverized coal, or the like is used as the fuel.

A cost of these fuels is very low, and even equipment costs and maintenance costs can be significantly reduced as compared with an electric furnace or the like.

<2-5. Recovery Step>

In the recovery step S5, the metal is recovered from the reduced product obtained in the reduction step S4.

Specifically, the reduced product (mixture) obtained by the heating and reduction treatment and containing a metal phase and a slag phase is cooled, pulverized and powdered as necessary, and the metal (metal powder particles) is separated and recovered.

In a method of separating the metal phase and the slag phase from the mixture of the metal phase and the slag phase obtained as a solid, for example, in addition to removal of unnecessary substances by sieving, a method such as separation by specific gravity or separation by magnetic force can be used.

The obtained metal phase and slag phase can be easily separated from each other because of poor wettability, and the metal phase and slag phase can be easily separated from the mixture by, for example, dropping a large mixture obtained by the above-described reduction step S4 with a predetermined drop or applying an impact such as applying a predetermined vibration during sieving.

By separating the metal phase and the slag phase in this manner, the metal phase is recovered.

EXAMPLES

Hereinafter, examples of the present invention will be described more specifically, but the present invention is not limited to the following examples.

(First Embodiment)

[Mixing Treatment Step]

For each sample, a nickel oxide ore as a raw material ore, an iron ore, quartz sand and limestone as flux components, a binder, and a first reducing agent were mixed using a mixer while adding an appropriate amount of water to obtain a mixture.

As the reducing agent, coal was used, and 30 mass% to 45 mass% of nickel oxide and iron oxide ($Fe_2O_3$) contained in the nickel oxide ore as the raw material ore were contained with respect to 100 mass% of a required chemical equivalent.

[Aggregating Step]

Next, moisture was appropriately added to the mixture obtained in the mixing treatment step to obtain an aggregate (sample) having a diameter of 15 mm 0.2 mm formed into a spherical shape by a pelletizer.

[Drying Step]

Next, a drying treatment was performed by blowing hot air of 200C to 250C to the aggregate obtained in the aggregating step such that a solid content was about 70 mass% and moisture was about 30 mass%.
Table 3 below shows a solid content composition (excluding carbon) of the aggregate (sample) after the drying treatment.

[Table 3]

| Ni | $Fe_2O_3$ | $SiO_2$ | CaO | $Al_2O_3$ | MgO | Others |
|---|---|---|---|---|---|---|
| 1.4 | 52.5 | 14.3 | 5.5 | 3.1 | 5.7 | Binder, reducing agent, and the like |

[Reduction Step]

Next, the aggregate (sample) obtained in the drying step was each charged into a reducing furnace in a nitrogen atmosphere substantially free of oxygen.
A temperature condition at the time of charging in the reducing furnace was 500C 20C.
Next, pellets of the mixture were subjected to a reduction heating treatment at a reduction temperature of 1,380C for a reduction time of 50 minutes.
In this case, coal was charged into the reducing furnace as the second reducing agent from one inlet of the reducing furnace (first reduction step) 10 minutes after the start of reduction.
In addition, a charcoal was charged into the reducing furnace as the second reducing agent from another inlet of the reducing furnace (second reduction step) after 40 minutes from the start of reduction.
The inside of the reducing furnace was purged with nitrogen so as to be in a nitrogen atmosphere substantially free of oxygen, thereby preventing oxygen of outside air from entering the furnace through the inlet.
Table 4 below shows an added amount of the second reducing agent.
In Comparative Examples 1-1 to 1-3, the second reducing agent was not charged into the reducing furnace.
After the reduction treatment, the sample was rapidly cooled to room temperature in a nitrogen atmosphere and taken out into the air.

[Recovery Step]

Each of reduced products (samples) after the reduction heating treatment was pulverized by a hydrometallurgical treatment, and then a metal was recovered by magnetic separation.
Then, a nickel metallization rate and a nickel content in metal were calculated by analysis using an ICP emission spectrometer (SHIMAZU S-8100 type).
The nickel metallization rate, the nickel content in metal, and a nickel metal recovery ratio were calculated by the following formulae (1), (2), and (3).

Nickel metallization rate = mass of nickel in metal/(mass of all nickel in reduced product) 100 (%)      Formula (1)

Nickel content in metal = mass of nickel in metal/(total mass of nickel and iron in metal) 100 (%)      Formula (2)

Nickel metal recovery ratio = amount of recovered nickel/(amount of charged ore nickel content proportion in ore) 100      Formula (3)

Table 4 below shows the nickel metallization rate, the nickel content in metal, and the nickel metal recovery ratio of each sample.

[Table 4]

| Sample | First reducing agent (coal) (mass %) | Second reducing agent | | Ni metalliza tion rate (%) | Ni content in metal (%) | Metal recovery ratio (%) |
|---|---|---|---|---|---|---|
| | | Charge amount in first reduct ion step (coal) (mass% ) | Charge amount in second reduct ion step (charc oal) (mass% ) | | | |
| Example 1-1 | 30 | 10 | 0 | 95.2 | 19.1 | 94.2 |
| Example 1-2 | 30 | 0 | 5 | 97.3 | 17.2 | 96.2 |
| Example 1-3 | 30 | 5 | 4 | 98.5 | 18.2 | 98.5 |
| Example 1-4 | 30 | 8 | 3 | 98.8 | 18.5 | 97.7 |
| Example 1-5 | 30 | 10 | 2 | 98.3 | 18.8 | 97.2 |
| Comparative Example 1-1 | 30 | - | - | 88.3 | 15.5 | 86.8 |
| Comparative Example 1-2 | 39 | - | - | 89.8 | 15.8 | 88.2 |
| Comparative Example 1-3 | 42 | - | - | 90.2 | 15.2 | 88.8 |

As shown in results of Table 4, in Examples 1-1 to 1-5 in which the second reducing agent was charged into the reducing furnace and the mixture was subjected to the reduction treatment, good results were obtained in terms of the nickel metallization rate and the nickel content in metal.

Among them, in Examples 1-3 to 1-5 in which a reducing agent containing coal and a charcoal was used as the second reducing agent, even better results were obtained in terms of the nickel metallization rate and the nickel content in metal as compared with those of Examples 1-1 and 1-2.

On the other hand, in Comparative Examples 1-1 to 1-3 in which the mixture was subjected to the reduction treatment without charging the second reducing agent into the reducing furnace, the Ni metallization rate, the Ni content, and the metal recovery ratio were values lower than those of the examples, and the effect of the present invention was not exhibited.

(Second Embodiment)

[Mixing Treatment Step]

For each sample, a nickel oxide ore as a raw material ore, an iron ore, quartz sand and limestone as flux components, a binder, and a first reducing agent were mixed using a mixer while adding an appropriate amount of water to obtain a mixture.

As the reducing agent, coal was used, and 30 mass% to 45 mass% of nickel oxide and iron oxide ($Fe_2O_3$) contained in the nickel oxide ore as the raw material ore were contained with respect to 100 mass% of a required chemical equivalent.

[Aggregating Step]

Next, moisture was appropriately added to the mixture obtained in the mixing treatment step to obtain an aggregate (sample) having a diameter of 15 mm 0.2 mm formed into a spherical shape by a pelletizer.

[Drying Step]

Next, a drying treatment was performed by blowing hot air of 200C to 250C to the aggregate obtained in the aggregating step such that a solid content was about 70 mass% and moisture was about 30 mass%.

Table 5 below shows a solid content composition (excluding carbon) of the aggregate (sample) after the drying treatment.

[Table 5]

| Ni | Fe$_2$O$_3$ | SiO$_2$ | CaO | Al$_2$O$_3$ | MgO | Others |
|---|---|---|---|---|---|---|
| 1.4 | 52.5 | 14.3 | 5.5 | 3.1 | 5.7 | Binder, reducing agent, and the like |

[Reduction Step]

Next, the aggregate (sample) obtained in the drying step was each charged into a reducing furnace in a nitrogen atmosphere substantially free of oxygen.

A temperature condition at the time of charging in the reducing furnace was 500C 20C.

Next, pellets of the mixture were subjected to a reduction heating treatment at a reduction temperature of 1,380C for a reduction time of 50 minutes.

In this case, coal was charged into the reducing furnace as the second reducing agent from one inlet of the reducing furnace (first reduction step) 10 minutes after the start of reduction.

In addition, a starch was charged into the reducing furnace as the second reducing agent from another inlet of the reducing furnace (second reduction step) after 40 minutes from the start of reduction.

The inside of the reducing furnace was purged with nitrogen so as to be in a nitrogen atmosphere substantially free of oxygen, thereby preventing oxygen of outside air from entering the furnace through the inlet.

Table 6 below shows an added amount of the second reducing agent.

In Examples 2-1 to 2-5, the starch was charged into the reducing furnace and was rapidly cooled to room temperature in the reducing furnace after 10 minutes, and the sample was taken out to the air.

On the other hand, in Comparative Examples 2-1 to 2-4, the second reducing agent was not charged into the reducing furnace.

[Recovery Step]

Each of reduced products (samples) after the reduction heating treatment was pulverized by a hydrometallurgical treatment, and then a metal was recovered by magnetic separation.

Then, similarly to the first embodiment described above, a nickel metallization rate, a nickel content in metal, and a nickel metal recovery ratio were measured.

Table 6 below shows the nickel metallization rate, the nickel content in metal, and the nickel metal recovery ratio of each sample.

[Table 6]

| Sample | First reducing agent (coal ) (mass %) | Second reducing agent | | Ni metalliza tion rate (%) | Ni content in metal (%) | Metal recovery ratio (%) |
|---|---|---|---|---|---|---|
| | | Charge amount in first reduct ion step (coal) (mass% ) | Charge amount in second reduct ion step (starc h) (mass% ) | | | |
| Example 2-1 | 30 | 10 | 0.1 | 95.0 | 19.0 | 94.1 |
| Example 2-2 | 30 | 0.1 | 5 | 97.1 | 17.1 | 96.2 |
| Example 2-3 | 30 | 5 | 4 | 98.2 | 18.0 | 98.4 |
| Example 2-4 | 30 | 8 | 3 | 98.6 | 18.3 | 97.6 |
| Example 2-5 | 30 | 10 | 2 | 98.1 | 18.7 | 97.0 |
| Comparative Example 2-1 | 30 | - | - | 88.0 | 15.3 | 86.5 |
| Comparative Example 2-2 | 39 | - | - | 89.5 | 15.5 | 88.1 |
| Comparative Example 2-3 | 42 | - | - | 89.9 | 15.0 | 88.6 |
| Comparative Example 2-4 | 45 | - | - | 90.5 | 14.1 | 89.1 |

As shown in results of Table 6, in Examples 2-1 to 2-5 in which the second reducing agent containing coal and a starch was charged into the reducing furnace and the mixture was subjected to the reduction treatment, good results were obtained in terms of the nickel metallization rate and the nickel content in metal.

On the other hand, in Comparative Examples 2-1 to 2-4 in which the mixture was subjected to the reduction treatment without charging the second reducing agent into the reducing furnace, the Ni metallization rate, the Ni content, and the metal recovery ratio were values lower than those of the examples, and the effect of the present invention was not exhibited.

(Third Embodiment)

[Mixing Treatment Step]

For each sample, a nickel oxide ore as a raw material ore, an iron ore, quartz sand and limestone as flux components, a binder, and a first reducing agent were mixed using a mixer while adding an appropriate amount of water to obtain a mixture.

As the reducing agent, coal was used, and 30 mass% to 45 mass% of nickel oxide and iron oxide (Fe2O3) contained in the nickel oxide ore as the raw material ore were contained with respect to 100 mass% of a required chemical equivalent.

[Aggregating Step]

Next, moisture was appropriately added to the mixture obtained in the mixing treatment step to obtain an aggregate (sample) having a diameter of 15 mm 0.2 mm formed into a spherical shape by a pelletizer.

[Drying Step]

Next, a drying treatment was performed by blowing hot air of 200C to 250C to the aggregate obtained in the aggregating step such that a solid content was about 70 mass% and moisture was about 30 mass%.

Table 7 below shows a solid content composition (excluding carbon) of the aggregate (sample) after the drying treatment.

[Table 7]

| Ni | $Fe_2O_3$ | $SiO_2$ | CaO | $Al_2O_3$ | MgO | Others |
|-----|------|------|-----|------|-----|-------|
| 1.4 | 52.5 | 14.3 | 5.5 | 3.1 | 5.7 | Binder, reducing agent, and the like |

[Reduction Step]

Next, the aggregate (sample) obtained in the drying step was each charged into a reducing furnace in a nitrogen atmosphere substantially free of oxygen.

A temperature condition at the time of charging in the reducing furnace was 500C 20C.

Next, pellets of the mixture were subjected to a reduction heating treatment at a reduction temperature of 1,380C for a reduction time of 50 minutes.

In this case, coal was charged into the reducing furnace as the second reducing agent from one inlet of the reducing furnace (first reduction step) 10 minutes after the start of reduction.

In addition, a starch and a charcoal were charged into the reducing furnace as the second reducing agent from another inlet of the reducing furnace (second reduction step) after 40 minutes from the start of reduction.

A weight ratio of the starch and the charcoal as the reducing agent was 1:1.

The inside of the reducing furnace was purged with nitrogen so as to be in a nitrogen atmosphere substantially free of oxygen, thereby preventing oxygen of outside air from entering the furnace through the inlet.

Table 8 below shows an added amount of the second reducing agent.

In Examples 3-1 to 3-5, the starch and the charcoal were charged into the reducing furnace and were rapidly cooled to room temperature in the reducing furnace after 10 minutes, and the sample was taken out to the air.

In Comparative Examples 3-1 to 3-4, the second reducing agent was not charged into the reducing furnace.

[Recovery Step]

Each of reduced products (samples) after the reduction heating treatment was pulverized by a hydrometallurgical treatment, and then a metal was recovered by magnetic separation.

Then, similarly to the first embodiment described above, a nickel metallization rate, a nickel content in metal, and a nickel metal recovery ratio were measured.

Table 8 below shows the nickel metallization rate, the nickel content in metal, and the nickel metal recovery ratio of each sample.

[Table 8]

| Sample | First reducing agent (coal) (mass %) | Second reducing agent | | Ni metalliza tion rate (%) | Ni cont ent in meta l (%) | Metal recov ery ratio (%) |
|---|---|---|---|---|---|---|
| | | Charge amount in first reduct ion step (coal) (mass% ) | Charge amount in second reduct ion step (starc h and charco al) (mass% ) | | | |
| Example 3-1 | 30 | 10 | 0.1 | 95.5 | 19.1 | 94.5 |
| Example 3-2 | 30 | 0.1 | 5 | 97.5 | 17.3 | 96.4 |
| Example 3-3 | 30 | 5 | 4 | 98.3 | 18.2 | 98.6 |
| Example 3-4 | 30 | 8 | 3 | 98.8 | 18.3 | 97.7 |
| Example 3-5 | 30 | 10 | 2 | 98.4 | 18.8 | 97.2 |
| Comparative Example 3-1 | 30 | - | - | 88.0 | 15.3 | 86.5 |
| Comparative Example 3-2 | 39 | - | - | 89.5 | 15.5 | 88.1 |
| Comparative Example 3-3 | 42 | - | - | 89.9 | 15.0 | 88.6 |
| Comparative Example 3-4 | 45 | - | - | 90.5 | 14.1 | 89.1 |

As shown in results of Table 8, in Examples 3-1 to 3-5 in which the second reducing agent containing a starch and a charcoal was charged into the reducing furnace and the mixture was subjected to the reduction treatment, good results were obtained in terms of the nickel metallization rate and the nickel content in metal.

On the other hand, in Comparative Examples 3-1 to 3-4 in which the mixture was subjected to the reduction treatment without charging the second reducing agent into the reducing furnace, the Ni metallization rate, the Ni content, and the metal recovery ratio were values lower than those of the examples, and the effect of the present invention was not exhibited.

EXPLANATION OF REFERENCE NUMERALS

1:          charging port
2:          rotary hearth furnace
20a to 20d:   processing chamber
21:          preheating chamber
22:          cooling chamber

**Claims**

1. A method for smelting a nickel oxide ore, comprising: a mixing treatment step of mixing a nickel oxide ore and a first reducing agent to obtain a mixture; and

a reduction step of subjecting the mixture to a reduction treatment by charging the mixture into a reducing furnace and charging a second reducing agent into the reducing furnace,

in the reduction step, a reducing agent comprising coal and further comprising at least one or more of a charcoal and a starch being used as the second reducing agent.

2. The method for smelting a nickel oxide ore according to claim 1, wherein in the reduction step, a reducing agent comprising coal and a charcoal is used as the second reducing agent.

3. The method for smelting a nickel oxide ore according to claim 1, wherein in the reduction step, a reducing agent comprising coal and a starch is used as the second reducing agent.

4. The method for smelting a nickel oxide ore according to claim 1, wherein in the reduction step, a reducing agent comprising coal, a starch, and a charcoal is used as the second reducing agent.

5. The method for smelting a nickel oxide ore according to any one of claims 1 to 4, wherein the reduction step comprises

a first reduction step of subjecting the mixture to a reduction treatment by charging at least a part of the second reducing agent into the reducing furnace, and

a second reduction step of subjecting the mixture to a reduction treatment by charging the remaining second reducing agent into the reducing furnace.

6. The method for smelting a nickel oxide ore according to claim 5, wherein in the first reduction step, the mixture is subjected to a reduction treatment by charging a reducing agent comprising coal into the reducing furnace, and

in the second reduction step, the mixture is subjected to a reduction treatment by charging a reducing agent comprising at least one of a charcoal and a starch into the reducing furnace.

# FIG. 1

NICKEL OXIDE ORE      IRON ORE, BINDER, AND FIRST REDUCING AGENT

| MIXING TREATMENT STEP | S1 |

MIXTURE

| AGGREGATING STEP | S2 |

AGGREGATE

| DRYING STEP | S3 |

SECOND REDUCING AGENT → | REDUCTION STEP | S4 |

REDUCED PRODUCT (METAL PHASE, SLAG PHASE)

| RECOVERY STEP | S5 |

METAL        SLAG

# FIG. 2

SAMPLE NAME:
STARCH

MEASUREMENT DATE AND TIME : 2022-06-10
SAMPING : 1.0 sec
SAMPLE WEIGHT : 4.98 mg
TEMPERATURE INCREASE RATE : 20.0 deg/min

# FIG. 3

SAMPLE NAME: CHARCOAL

MEASUREMENT DATE AND TIME : 2022-06-10
SAMPING : 1.0 sec
SAMPLE WEIGHT : 10.64 mg
TEMPERATURE INCREASE RATE : 20.0 deg/min

# FIG. 4

SAMPLE NAME: COAL (PULVERIZED COAL) NITROGEN ATMOSPHERE

MEASUREMENT DATE AND TIME : 2022-08-05
SAMPING : 1.0 sec
SAMPLE WEIGHT : 20.97 mg
TEMPERATURE INCREASE RATE : 20.0 deg/min

# FIG. 5

## INTERNATIONAL SEARCH REPORT

| International application No. |
|---|
| **PCT/JP2024/006783** |

**A. CLASSIFICATION OF SUBJECT MATTER**

*C22B 23/02*(2006.01)i; *C22B 5/10*(2006.01)i
FI: C22B23/02; C22B5/10

According to International Patent Classification (IPC) or to both national classification and IPC

**B. FIELDS SEARCHED**

Minimum documentation searched (classification system followed by classification symbols)

C22B23/02; C22B5/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-31705 A (SUMITOMO METAL MINING CO., LTD.) 01 March 2021 (2021-03-01) claims 1, 6, paragraphs [0052], [0057]-[0058] | 1-5 |
| A | | 6 |
| Y | JP 2022-92451 A (SUMITOMO METAL MINING CO., LTD.) 22 June 2022 (2022-06-22) claim 1, paragraphs [0066]-[0067] | 1-5 |
| A | | 6 |
| Y | JP 2023-19428 A (SUMITOMO METAL MINING CO., LTD.) 09 February 2023 (2023-02-09) claim 1, paragraphs [0066], [0074]-[0075] | 1-5 |
| A | | 6 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| :--- |
| **PCT/JP2024/006783** |

| Patent document cited in search report | | | Publication date (day/month/year) | Patent family member(s) | Publication date (day/month/year) |
| :--- | :--- | :--- | :--- | :--- | :--- |
| JP | 2021-31705 | A | 01 March 2021 | (Family: none) | |
| JP | 2022-92451 | A | 22 June 2022 | (Family: none) | |
| JP | 2023-19428 | A | 09 February 2023 | (Family: none) | |

Form PCT/ISA/210 (patent family annex) (July 2022)

**EP 4 692 385 A1**

**Patent documents cited in the description**

- JP 2011256414 A